# EUROPEAN PATENT SPECIFICATION

(11) **EP 1 495 954 B1**
(45) Date of publication and mention of the grant of the patent: **24.03.2010**
(21) Application number: 04015801.6
(22) Date of filing: 05.07.2004
(51) Int. Cl.: B62J 17/04

(54) **Windshield device for a straddle type vehicle**
Windschutzscheibe für ein im Grätschsitz zu benutzendes Fahrzeug
Pare-brise pour véhicule de type monté a califourchon

(30) Priority: 07.07.2003 JP 2003192902
(43) Date of publication of application: 12.01.2005
(60) Divisional application: 09010306.0
(73) Proprietor: Yamaha Hatsudoki Kabushiki Kaisha, Iwata-shi, Shizuoka-ken (JP)
(72) Inventor: Ohira, Masaru c/o Yamaha Hatsudoki Kabushiki Kaisha, Iwata-shi Shizuoka-ken (JP); Yamamoto, Yoshiaki c/o Yamaha Hatsudoki Kabushiki Kaisha, Iwata-shi Shizuoka-ken (JP)
(74) Representative: Grünecker, Kinkeldey, Stockmair & Schwanhäusser Anwaltssozietät

(56) References cited:
- AU-A- 8 412 282
- JP-A- 2002 104 267
- US-A- 4 455 045
- US-A- 5 577 570
- US-A- 5 855 404
- US-B1- 6 505 877

## Description

The invention relates to a windshield device for a straddle type vehicle according to the preamble of claim 1. Document AU 8 4122 82 A shows such a windshield device. The invention further refers to a straddle type vehicle comprising such a windshield device.

A conventional windshield device is known, for example, from JP-A-2002-104267. Therein, a front cowling is provided for covering the front of a vehicle from the front and a windscreen is provided above the front cowling. Behind the windscreen is disposed a meter panel for a speed meter and the like. Further, an induction port is opened in the front face of the front cowling and a headwind is introduced from the induction port, while a blow-off port is formed at the forward base of the meter panel. The blow-off port of the meter panel is opened toward a region behind the windscreen to establish communication between the blow-off port and the induction port. A sliding shutter is provided at the blow-off port of the meter panel and the blow-off port can be opened/closed by the shutter.

Such a construction, however, is complicated in construction, assembly and only very limited in effect, thereby requiring man-hours and an increased number of parts in forming these induction port and blow-off port as well as the wind guide path.

Therefore, it is an object of the invention to provide a windshield device for a straddle type vehicle, capable of introducing a headwind to the rear side of a screen, with an improved structure. It is further an object to provide a straddle type vehicle with an improved windshield device.

For a windshield device of the above kind, this object is solved according to the features of claim 1. Preferred embodiments are defined in the dependent claims.

By forming an induction port between the screen and the body so that a headwind is introduced to the rear side of said screen through the induction port, no separate induction channel or hole needs to be formed in the screen or the body and no separate duct is needed. Thereby, a headwind can be introduced to the rear side of the screen, with a simplified structure.

Such a windshield device for a straddle type vehicle preferably comprises mounting portions at a screen as a windshield on both lower ends thereof which is attached to a body and the lower part of the screen has the laterally central portion without touching said body to form an induction port between the screen and the body so that a headwind is introduced to the rear side of said screen through the induction port.

In other words, the windshield device is preferably constructed such that a lower portion of the screen is attached to the body at mounting portions, wherein a substantially laterally central portion of the screen is separated from the body by the air induction port.

A panel is disposed at the backside of the lower part of said screen and said induction port is formed between said panel and said screen.

Therefore, a wind guide path from the induction port can be formed easily.

Further a projection is formed projecting in a wind-sending path between said panel and said screen. Therefore, a wind striking on the driver's helmet can be decreased in volume while its velocity can be lowered, thereby further reducing wind noise or the like.

Said projection is configured such that it diffuses introduced air in the vicinity of said induction port. Therefore, the introduced air can be further diffused.

Therein, preferably said projection is provided extending in the longitudinal direction of the body. Therefore, guiding capacity of the introduced air can be improved.

Moreover, preferably said projection is configured such that it diffuses introduced air in the lateral direction in the vicinity of said induction port. Therefore, a wind striking on the driver's helmet can be further decreased in volume.

According to a further embodiment, said projection is provided, at least at the front, with a plurality of surfaces separated from each other laterally toward the rear. Therefore, diffusivity of the introduced air can be further improved.

In particular, said projection may have a plurality of projecting portions formed side by side in the lateral direction and the projecting portions are formed to be separated from each other laterally toward the rear. Therefore, diffusivity of the introduced air can be further improved.

According to a still further embodiment, said projection is movably provided, so that the direction of diffusion of introduced air can be varied. Therefore, the wind volume and the wind velocity can be adjusted to suit the driver's physique (position of the helmet).

It is possible, however, that said projection is formed integral with said panel or said screen. Therefore, introduced air can be diffused without need of increasing the number of parts.

Preferably, the lower part of said screen extends further forward at the laterally central portion than at both the lower sides. Therefore, a headwind can be introduced smoothly.

Accordingly, it is desired that mounting screws of said mounting portions are hidden by extension pieces extending upward from a molding disposed below said screen. Therefore, turbulence of air flow caused by the mounting portions can be suppressed.

Therein, preferably an upwardly-rising draining portion is formed on the lower part of said screen and along the laterally central portion thereof. Therefore, water flowing into the rear side of the screen can be blocked by the draining portion, preventing the water from flowing into the rear side of the screen together with introduced air.

Additionally, the laterally central portion of the lower part of said screen and the draining portion thereon may extend further forward toward the center than at both the lower sides. Therefore, water blocked by the draining portion can be guided from the central portion toward both the sides.

Therein, it is possible that the lower part of said screen extends further forward at the laterally central portion than at both the lower sides and the forward end of said projection is disposed further forward than both the lower sides. Therefore, guiding capacity of the headwind by the projection can be improved.

According to still another embodiment, a wind guide path formed between said panel and said screen is configured such that its flow passage area is smallest at the side of said induction port. Therefore, introduced air flowing in at the narrowest induction port increases its flow passage area in the wind guide path, thereby effecting diffusion of the introduced air.

Preferably, said panel is constituted by a body cowl, a molding or an inner panel. Therefore, since they are existing parts, the number of parts or mounting man-hours need not be increased.

Furthermore, a straddle type vehicle is proposed which comprises a windshield device according to the one described before or at least one embodiment thereof.

Further preferred embodiments of the invention are subject to the subclaims.

In the following, the invention will be described in greater detail by means of a preferred embodiment with respect to the accompanying drawings, wherein:
- Fig. 1: is a front view of covers for a scooter type vehicle according to an embodiment of this invention;
- Fig. 2: is a side view corresponding to Fig. 1 according to the embodiment;
- Fig. 3: is a front view of a screen and the like showing the flow of air and the like according to the embodiment;
- Fig. 4: is a side view corresponding to Fig. 3 according to the embodiment;
- Fig. 5: is a front view of a body cowl according to the embodiment;
- Fig. 6: is a side view of the body cowl according to the embodiment;
- Fig. 7: is a plan view of an inner panel according to the embodiment;
- Fig. 8: is a right side view of the inner panel according to the embodiment;
- Fig. 9: is a front view showing the screen according to the embodiment;
- Fig. 10: is a right side view showing the screen according to the embodiment;
- Fig. 11: is a partially broken-away plan view of a molding according to the embodiment;
- Fig. 12: is a sectional view taken along line A-A of Fig. 11 according to the embodiment;
- Fig. 13: is a side view corresponding to Fig. 11 according to the embodiment;
- Fig. 14: is a sectional view taken along line B-B of Fig. 13 according to the embodiment;
- Fig. 15: is a sectional view taken along line C-C of Fig. 1 according to the embodiment;
- Fig. 16: is a sectional view taken along line D-D of Fig. 1 according to the embodiment;
- Fig. 17: is a sectional view taken along line E-E of Fig. 2 according to the embodiment;
- Fig. 18: is a sectional view taken along line F-F of Fig. 1 according to the embodiment;
- Fig. 19: is a sectional view taken along line G-G of Fig. 1 according to the embodiment;
- Fig. 20: is a sectional view taken along line H-H of Fig. 1 according to the embodiment;
- Fig. 21: is a sectional view taken along line I-I of Fig. 1 according to the embodiment;
- Fig. 22: is a sectional view taken along line J-J of Fig. 1 according to the embodiment;
- Fig. 23: is a sectional view taken along line K-K of Fig. 2 according to the embodiment;
- Fig. 24: is a front view of the lower part of an inner panel, showing a variation of the embodiment;
- Fig. 25: is a sectional view taken along line L-L of Fig. 24, showing the variation;
- Fig. 26: is a sectional view similar to Fig. 25, showing another variation;
- Fig. 27: is a front view of the lower part of an inner panel, showing another variation;
- Fig. 28: is a sectional view taken along line M-M of Fig. 27, showing the variation;
- Fig. 29: is a sectional view similar to Fig. 28, showing another variation;
- Fig. 30: is a front view of the lower part of an inner panel, showing another variation;
- Fig. 31: is a front view of the lower part of an inner panel, showing another variation;
- Fig. 32: is a front view of the lower part of an inner panel, showing another variation;
- Fig. 33: is a front view of the lower part of an inner panel, showing another variation;
- Fig. 34: is a front view of the front portion of the vehicle, with an inner panel attached thereto, showing another variation;
- Fig. 35: is a front view of the lower part of an inner panel, showing another variation;
- Fig. 36: is a front view of the lower part of an inner panel, showing another variation;
- Fig. 37: is a front view of the lower part of an inner panel, showing another variation;
- Fig. 38: is a front view of the lower part of an inner panel, showing another variation;
- Fig. 39: is a front view of the lower part of an inner panel, showing another variation;
- Fig. 40: is a front view of the lower part of an inner panel, showing another variation;
- Fig. 41: is a front view of the lower part of an inner panel, showing another variation;
- Fig. 42: is a front view of the lower part of an inner panel, showing another variation; and
- Fig. 43: is a front view of the lower part of an inner panel, showing another variation.

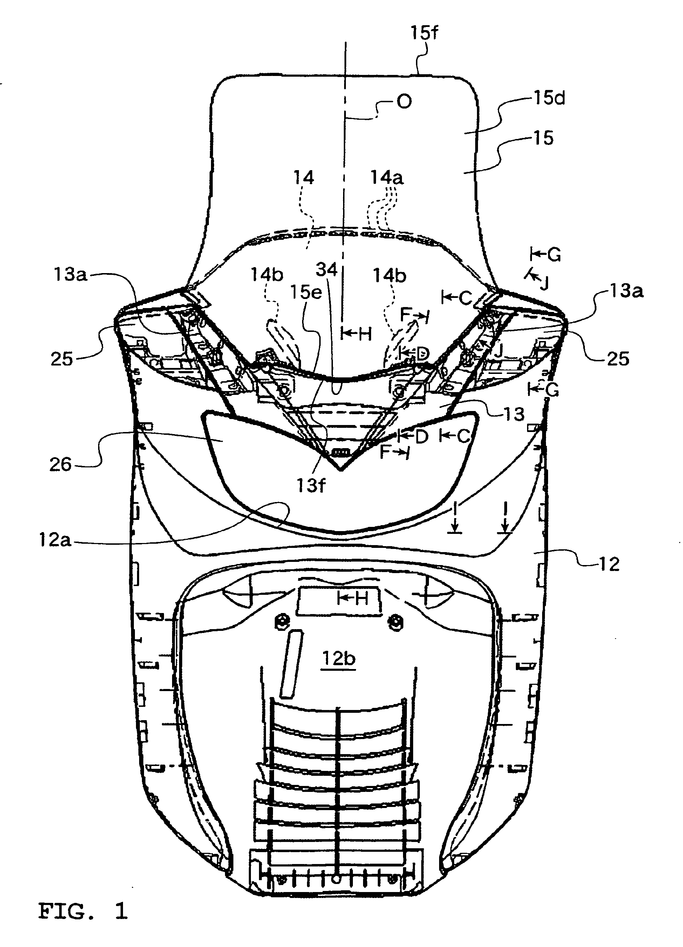

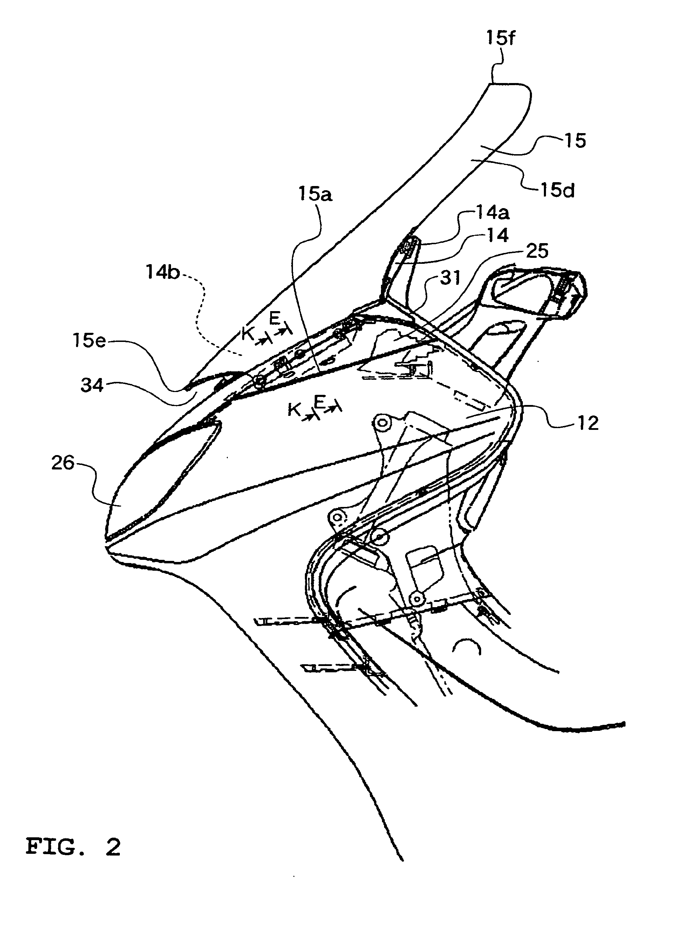

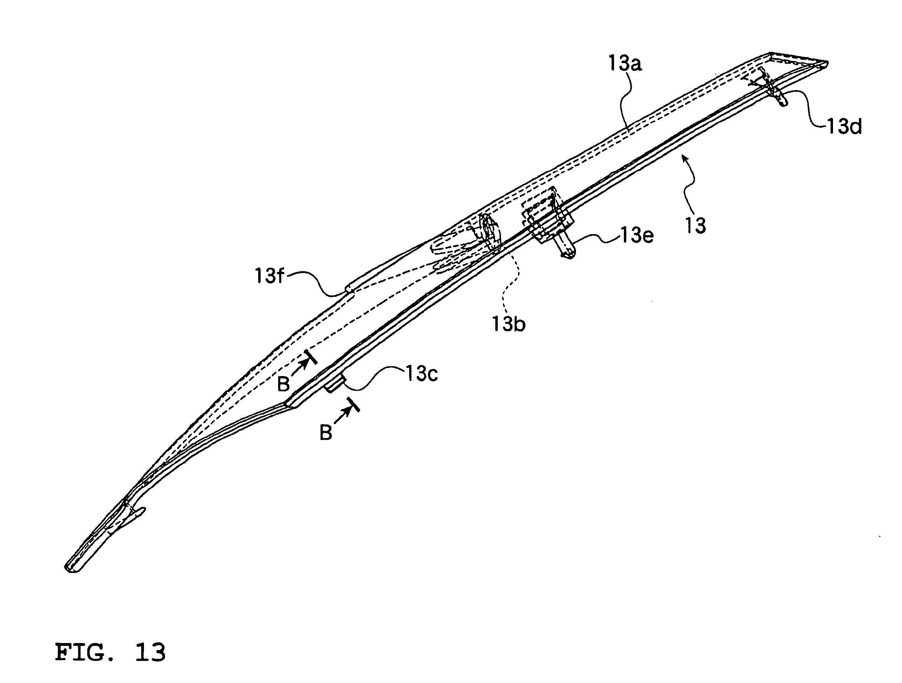

Now, in accordance with Fig. 1 through Fig. 23, an embodiment of the invention will be described below.

First, referring to the construction, a plurality of stays 11 (described later) are attached to an unillustrated body frame. A body cowl 12 is attached to these stays 11. A molding 13 and a second inner panel 14 as a "panel" are attached to the body cowl 12 and, further, both ends of a screen 15 are attached to the body cowl 12.

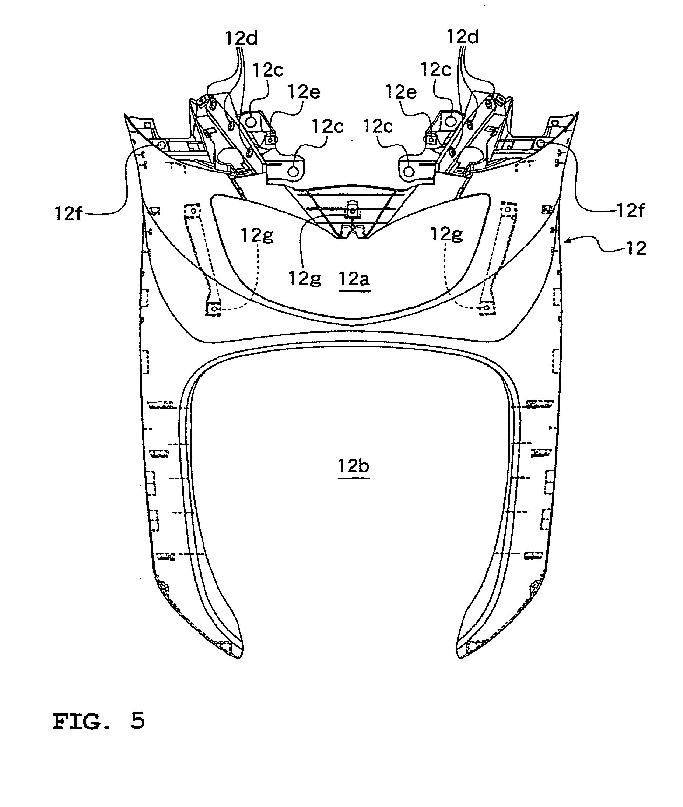

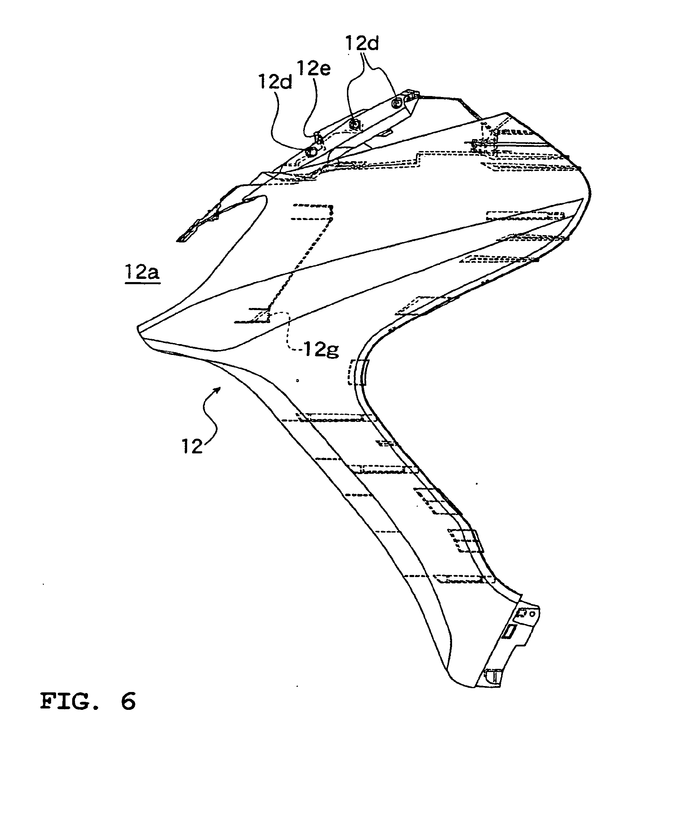

Specifically, the body cowl 12 is formed with a head lamp opening 12a and a front wheel opening 12b below the head lamp opening 12a, as shown in Fig. 5 and Fig. 6.

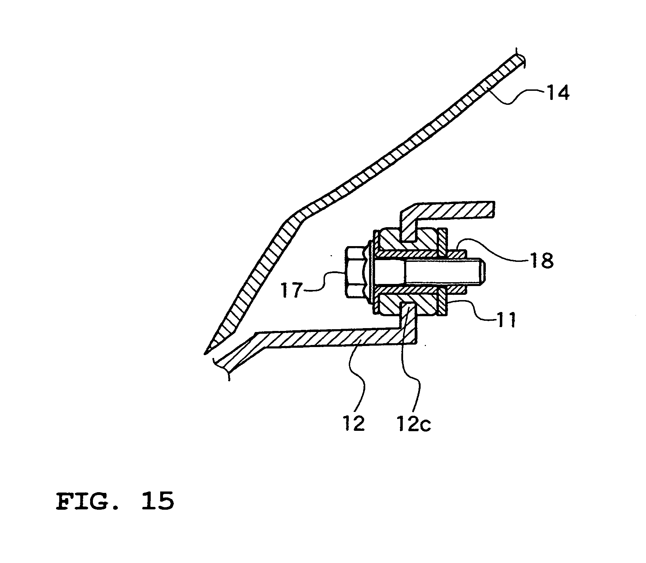

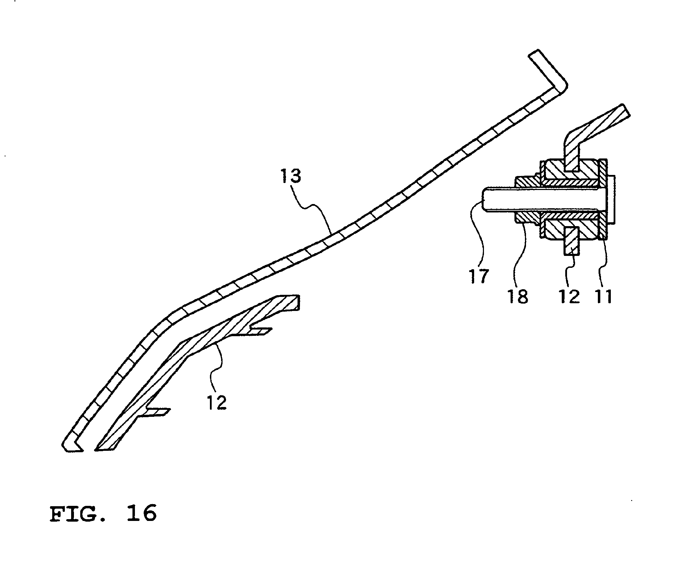

In addition, above the head lamp opening 12a are formed a plurality of stay mounting portions 12c on both sides and these stay mounting portions 12c are attached to the stays 11 through bolts 17 and nuts 18, as shown in Fig 15 and Fig. 16, whereby the body cowl 12 is supported on the body.

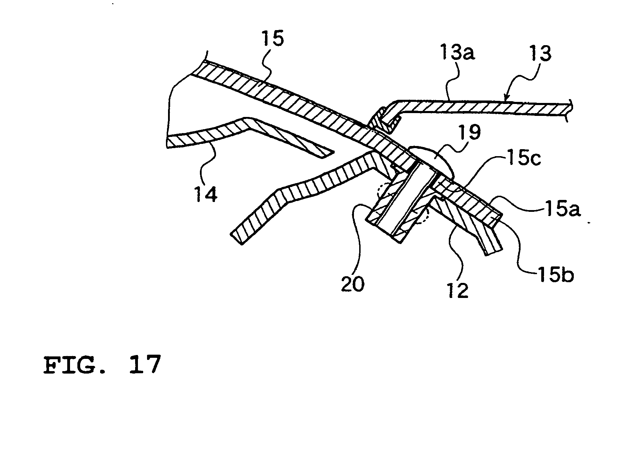

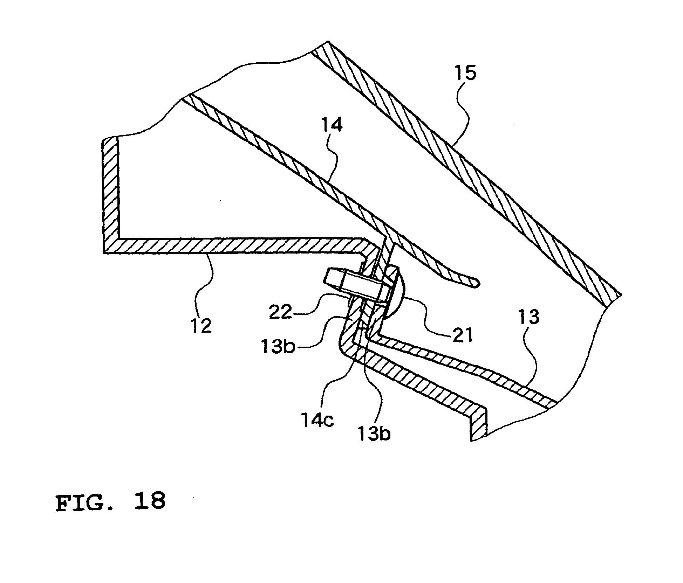

Further, the body cowl 12 is formed with a plurality of screen mounting portions 12d in the vicinity of these stay mounting portions 12c, and panel inner molding mounting portions 12e between these stay mounting portions 12c, as shown in Fig. 5. The lower ends 15a of the screen 15 are attached to these screen mounting portions 12d through bolts 19 and nuts 20, as shown in Fig. 17, whereby the screen 15 is attached to the body cowl 12. Furthermore, to the panel inner molding mounting portions 12e are attached the molding 13 and the second inner panel 14 through bolts 21 and nuts 22, as shown in Fig. 18.

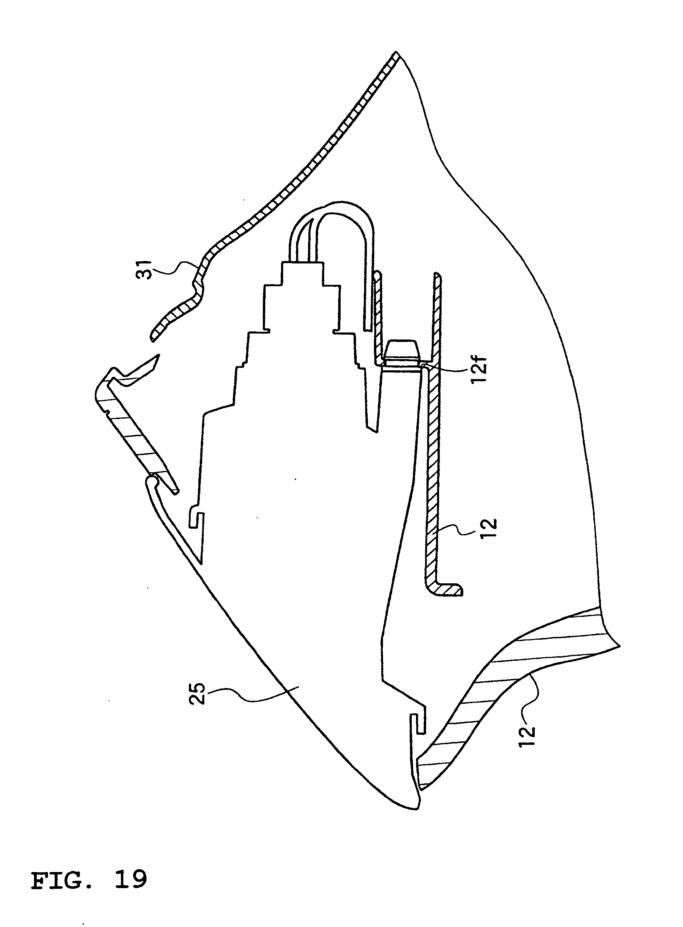

Moreover, this body cowl 12 is formed with flasher lamp mounting portions 12f on the outside of and in the vicinity of these screen mounting portions 12d and to these mounting portions 12f are attached flasher lamps 25, as shown in Fig. 19. Below the flasher lamps 25 is engaged therewith the body cowl 12 and above the flasher lamps 25 is disposed a panel inner 14.

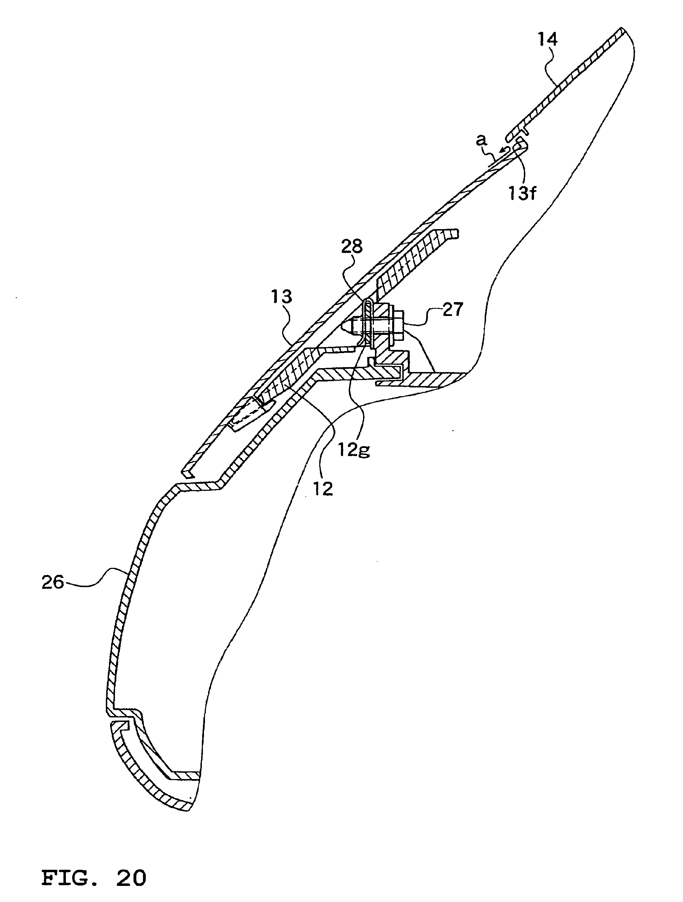

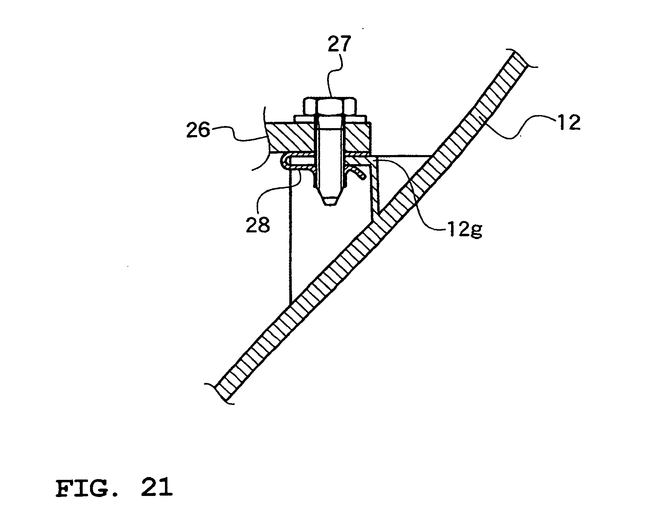

Further, the body cowl 12 is formed with a head lamp mounting portion 12g above the head lamp opening 12a, and to the head lamp mounting portion 12g is attached a head lamp 26 with a bolt 27 and a spring nut 28, as shown in Fig. 20. Further, head lamp mounting portions 12g are formed also at both sides of the head lamp 26 in a total of four locations, and to these head lamp mounting portions 12g is attached the head lamp 26 with bolts 27 and spring nuts 28, as shown in Fig. 21. As a result, the head lamp 26 is disposed facing the outside (front of the vehicle) from the head lamp opening 12a.

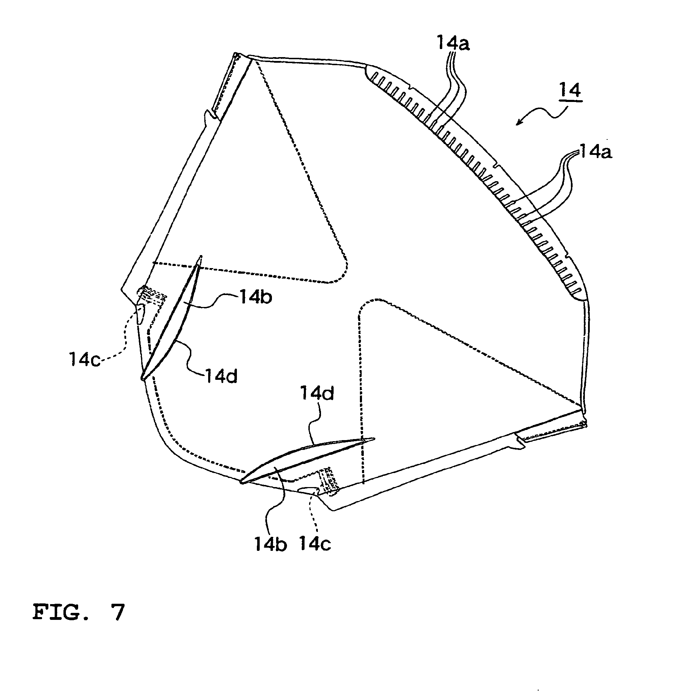

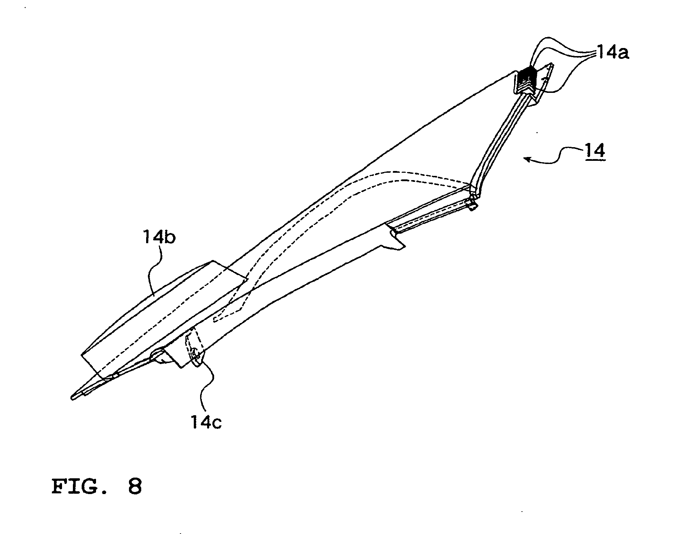

The second inner panel 14 is made of a plastic plate formed into a little curved shape, and it is formed, at the upper edge, with a large number of ribs 14a in a given pitch and on the lower part, with a pair of left and right projections 14b, as shown in Fig. 7 and Fig. 8.

These projections 14b are formed bulging upwardly in a wind-sending path in the vicinity of an induction port 34 (described later), each assuming approximately a wing-like shape in plan and formed approximately in the longitudinal direction, as shown in Fig. 7. A pair of these projections 14b are formed such that they are separated from each other laterally toward the rear.

Further, the lower edge 14e of the second inner panel 14 extends further forward at the laterally central portion than at both the lower sides. Also, the second inner panel 14 is formed, at both the lower sides, with a pair of mounting pieces 14c extending downwardly approximately in the vertical direction from the general surface. With these mounting pieces 14c brought into plane contact with the panel inner molding mounting portions 12e of the body cowl 12, the second inner panel 14 is attached to the body cowl 12 with bolts 21 and nuts 22.

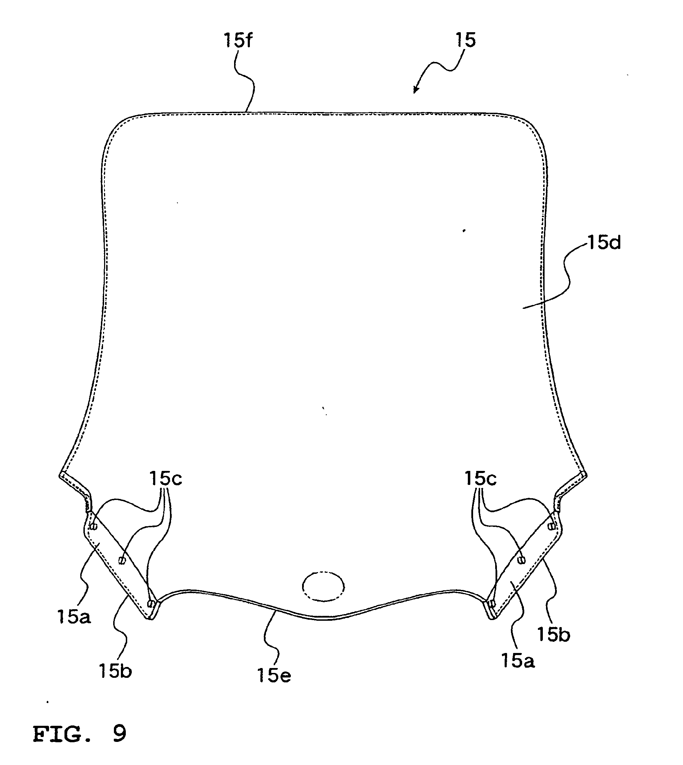

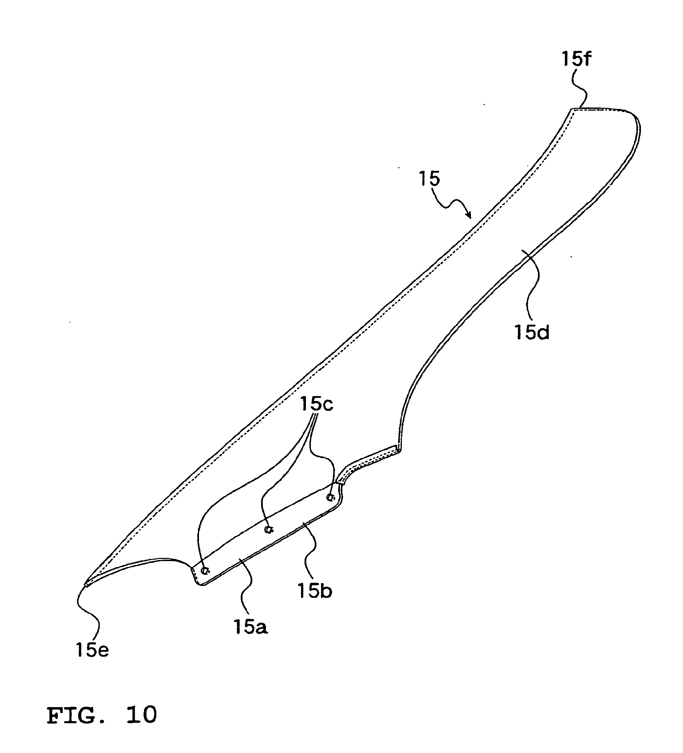

Further, the screen 15, as shown in Fig. 9 and Fig.10, is formed with a transparent windshield 15d on the upper side and the lower edge 15e below the windshield 15d extends further forward at the laterally central portion than at both the lower sides. Mounting pieces 15b are formed on both ends of the screen 15 and three mounting portions 15e are formed for each mounting piece 15b. These mounting portions 15e are attached to the screen mounting portions 12d of the body cowl 12 with bolts 19 and nuts 20, as shown in Fig. 17.

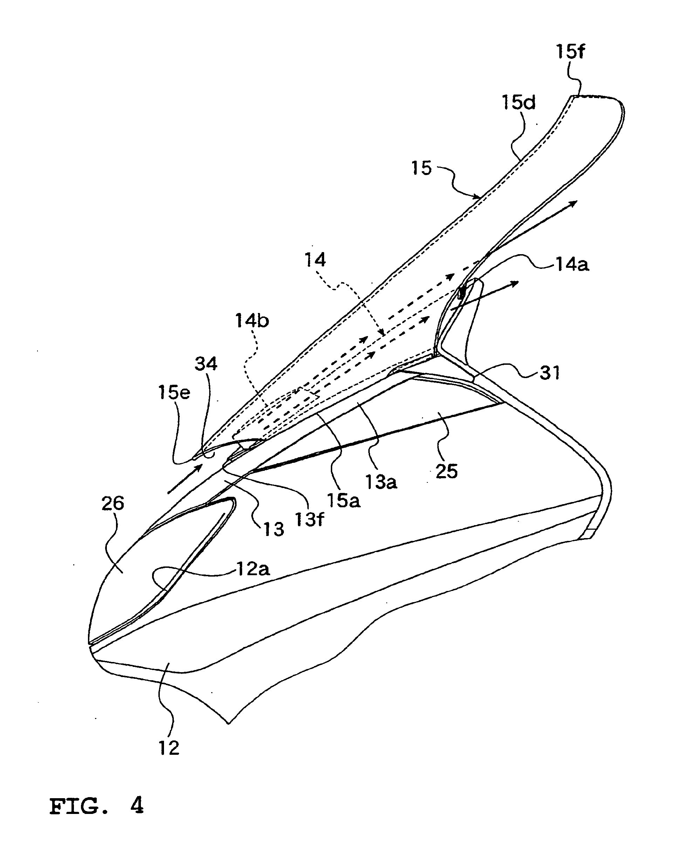

With the screen 15 as described above, the lower part of the screen 15 is positioned covering the second inner panel 14 and the clearance between the screen 15 and the inner panel 14 is widened gradually toward the center line O of the screen 15, as shown in Fig.4. As a result, a wind guide path is formed between the screen 15 and the second inner panel 14, and an opening of the wind guide path at the lower edge 15e of the screen 15 constitutes an induction port 34 for introducing a headwind to the rear side of the screen 15. The wind guide path is configured such that its flow passage area is smallest at the induction port 34.

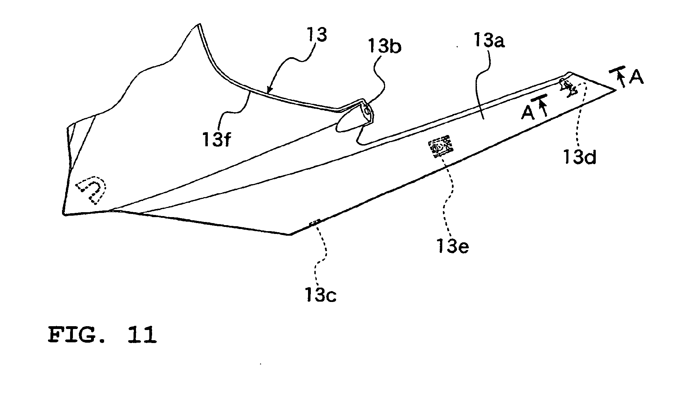

Furthermore, the molding 13 is disposed obliquely downward of the second inner panel 14, as shown in Fig. 11 through Fig. 14, and formed with a pair of extension pieces 13a extending obliquely upward. Inside these extension pieces 13a are formed mounting pieces 13b to be fastened to the panel inner molding mounting portions 12e of the body cowl 12 together with mounting pieces 14c of the second inner panel 14 through bolts 21 and nuts 22.

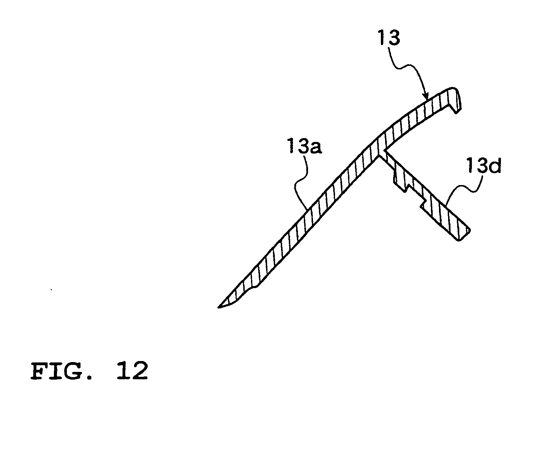

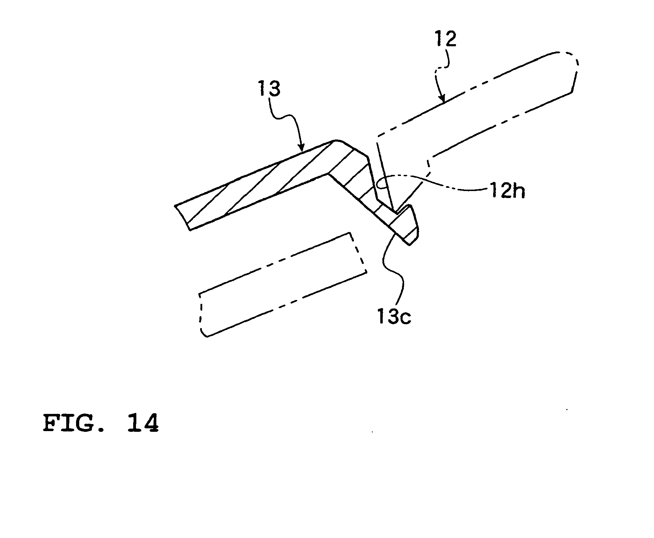

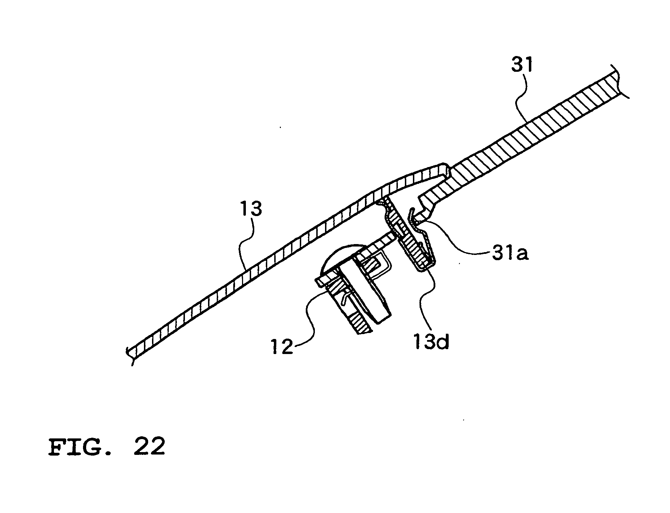

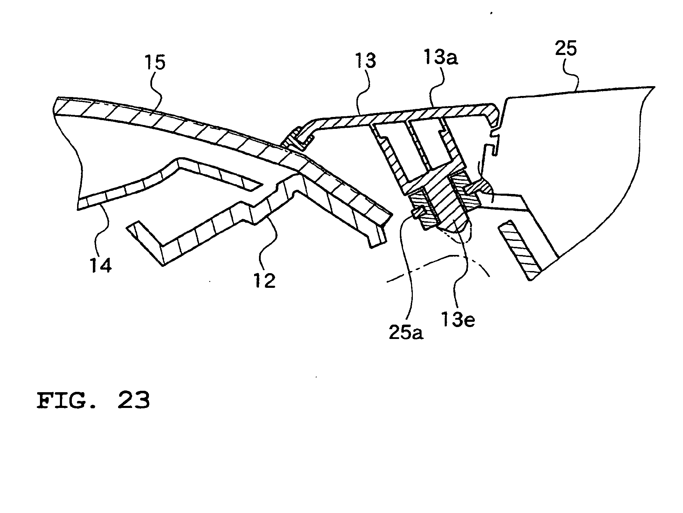

Each extension piece 13a is formed, at the base, with a first engagement piece 13c to be engaged with an engagement hole 12h of the body cowl 12, as shown in Fig. 14, and at the forward end (upper end), with a downwardly projecting second engagement piece 13d, as shown in Fig. 12, which second engagement piece 13d is engaged with an engagement hole 31 a of the first inner panel 31, as shown in Fig. 22. Further, in the middle of the extension piece 13a is formed a fitting pin 13e projecting downwardly, which is fitted in a mounting piece 25a of the flasher lamp 25, as shown in Fig. 23. The plurality of mounting portions 15c of the screen 15 are covered with the pair of these extension pieces 13a

Now, the mounting order of the windshield device with the foregoing construction will be described.

First, the body cowl 12 is supported on the body through the stays 11 to attach the second inner panel 14 to the body cowl 12 with bolts 21 and nuts 22, and to attach the screen 15 to the body cowl 12 with bolts 19 and nuts 20.

Then, the first and second engagement pieces 13c, 13d and the fitting pins 13e of the molding 13 are interlocked with and fitted in the first inner panel 31 and the like. The mounting pieces 13b of the molding 13 are attached to the panel inner molding mounting portions 12e with bolts 21 and nuts 22. The panel inner molding mounting portions 12e of the body cowl 12, the mounting pieces 14c of the second inner panel 14, and the mounting pieces 13b of the molding 13 are fastened together.

In this case, the bolts 21 are screwed into the nuts 22 obliquely from below, so that they are difficult to see from the front of the vehicle, securing the quality of external appearance. In addition, with attachment/detachment of these bolts 21, other engagement pieces 13c, 13d and the like of the molding 13 can be attached/detached in one touch, providing easy attachment/detachment of the molding 13.

Since attachment of the molding 13 allows the mounting portions 15c of the screen 15 to be covered with and hidden by the extension pieces 13a of the molding 13, turbulence of air flow by the mounting portions 15c can be suppressed, the quality of external appearance can be improved, and theft prevention of the screen 15 can be secured.

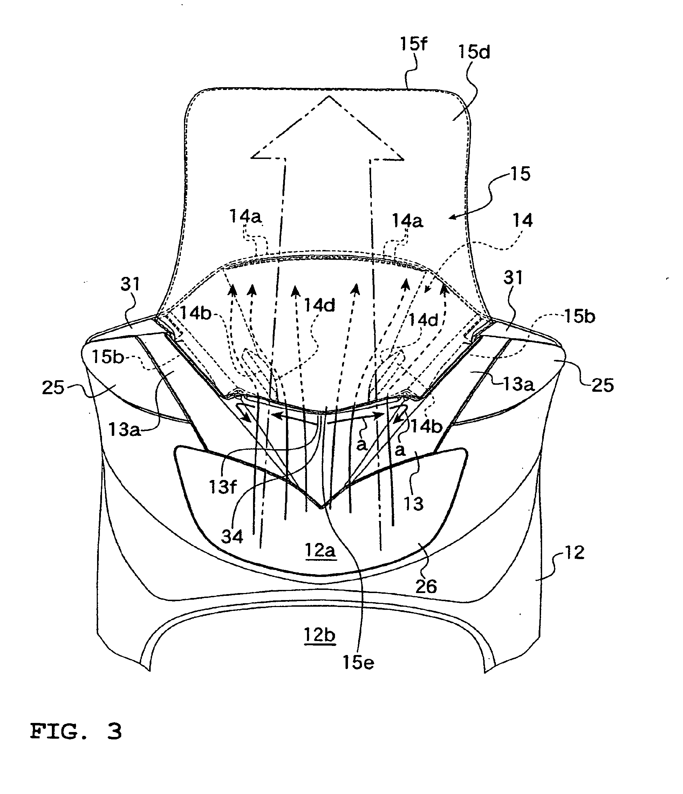

On the other hand, during running of the vehicle, a headwind is introduced to the rear side of the screen 15 from the induction port 34 between the lower edge 15e of the screen 15 and the second inner panel 14, as shown in Fig. 3 and Fig. 4, and passes through a region around the drivers helmet. As such, the headwind flowing rearward over the upper edge 15f from the front of the screen 15 is decreased in its volume. Therefore, the air flow around the helmet is abated, wind noise during running is lowered, stillness is improved, and unpleasant back pressure (pushing force caused by a wind from the front swirled in at the rear which pushes the driver's body forward) will be suppressed.

In this case, the projections 14b are provided such that they are separated from each other laterally toward the rear and thus the introduced air flow is diffused laterally outward, so that the velocity of air behind the screen 15 can be reduced, providing reduction in wind noise around the helmet. In addition, eddy currents of air produced at the lower edge 15e of the screen 15 causes a large fluctuation of the air pressure behind the screen 15 and a feeling of periodic wind pressure is given to the driver. However, diffusion of the eddy currents by the projections allows to suppress the fluctuation of the air pressure, decreasing the feeling of periodic air pressure.

Further, the projection 14b assumes a wing-like shape and the introduced air flows along the curved side 14d of the projection 14b, so that the air can be diffused further outward. By the way, without formation of the projections 14b, the introduced air is concentrated as shown in Fig. 3 by the double dot dashed line and passes through a region around the helmet at high velocity, which produces a large wind noise.

Furthermore, at the time of running in the rain, water strikes on the front face of the molding 13, together with a headwind, as shown in Fig. 18 and Fig. 20, the air and water flows upward along the front face of the molding 13, and the water strikes against the draining portion 13f formed at the upper edge of the molding 13, which hinders its upward flow, while the air flows over the draining portion 13f and is introduced from the induction port 34 as described above.

On the other hand, since the draining portion 13f extends further forward toward the center than at both the lower sides, the water striking against the draining portion 13f in the central area flows sideways as shown in Fig. 3 by the arrows (a) due to headwind pressure and is collected in regions of the mounting pieces 13b of the molding 13. If collected by a given amount, it flows downward due to its weight and is blown off sideways by the headwind pressure.

Thus, ingress of water from the induction port 34 into the rear side of the screen 15 can be suppressed.

Further, in the foregoing configuration, the mounting portions 15c at the lower ends 15a of the screen 15 are attached to the body (body cowl 12), the lower edge 15e of the screen 15 has the laterally central portion without touching the second inner panel 14 to form an induction port 34 between the screen 15 and the second inner panel 14, and a headwind is introduced to the rear side of the screen 15 through the induction port 34. Therefore, no induction port 34 need be formed in the screen 15 and no separate duct is needed, whereby a headwind can be introduced to the rear side of the screen 15, with a simple structure.

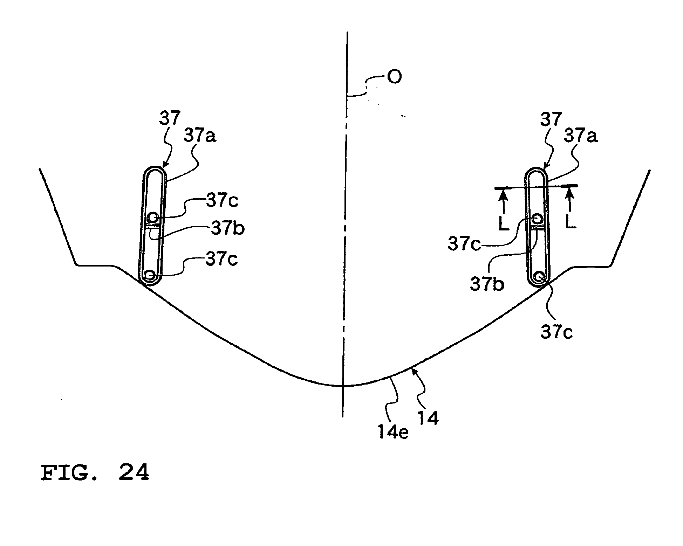

In Fig. 24-Fig. 34 are shown variations of the projection.

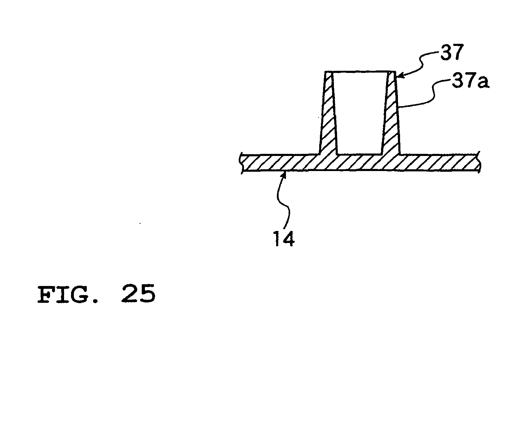

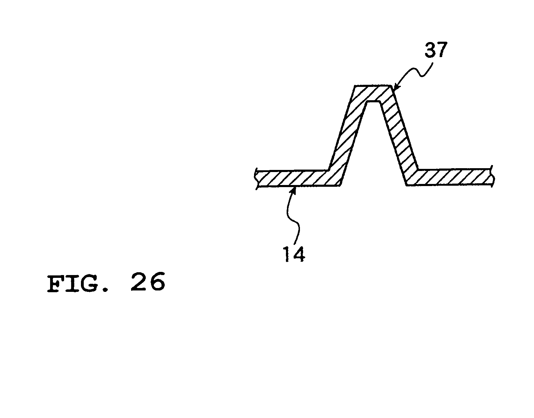

In Fig. 24 and Fig. 25, a pair of left and right longitudinally elongated projections 37 are formed. The projection 37 has a rising wall 37a formed into an elongated annular shape in cross-section, as shown in Fig. 25. Longitudinally centrally of the rising wall is formed a partition wall 37c, and in regions surrounded by the rising wall 37a and the partition wall 37c are formed two draining holes 37d in two locations to discharge water collected in these regions. The cross section of the projection 37 may be formed into a mountain-like bulging shape, as shown in Fig. 26.

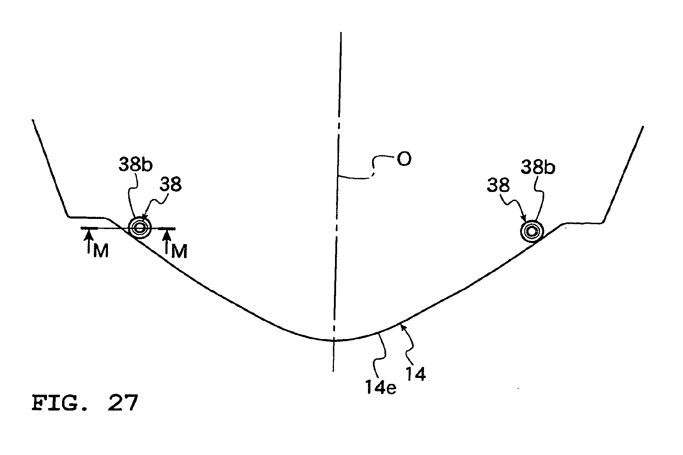

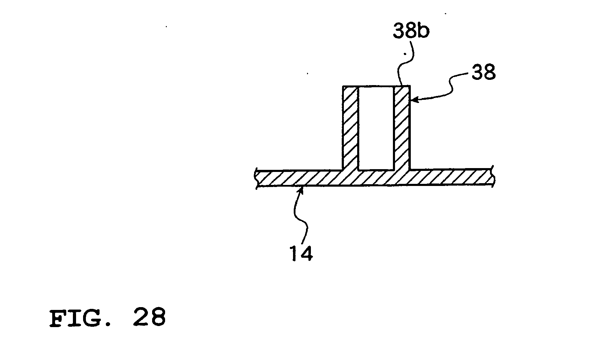

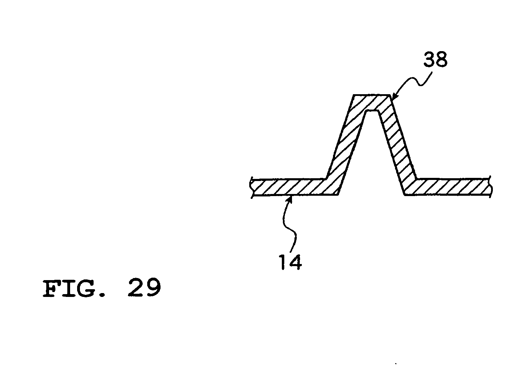

In Fig. 27 and Fig. 28 is shown a pin type projection 38, the cross section of which has a rising wall 38a formed into a ring, as shown in Fig. 28. A headwind can also be diffused by this pin type projection 38. As a matter of course, it may be formed into a bulging shape, as shown in Fig. 29.

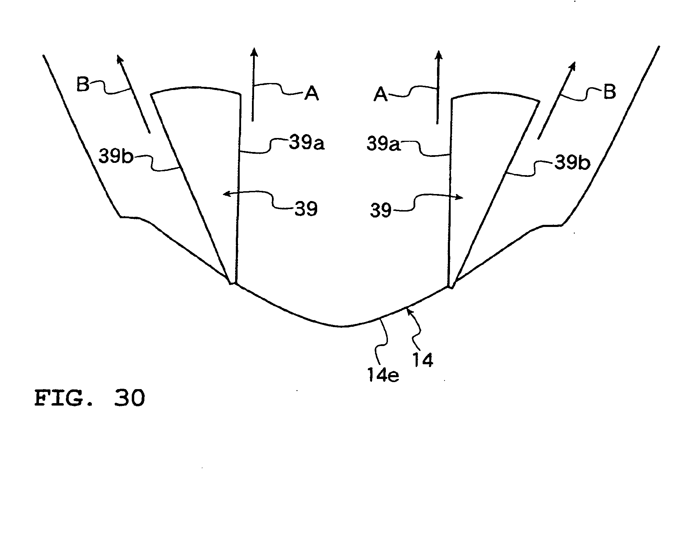

Projections 39 shown in Fig. 30, like those of the embodiment 1, are formed on the left and right side in a pair, but they are different in shape as compared with those shown in the embodiment 1, each assuming approximately a triangular shape. These projections 39 are configured such that each has an inner side face 39a formed in the longitudinal direction and their inner side faces 39a are disposed parallel to each other. Outer side faces 39b of the two projections 39 are formed slanting such that they are spread outward toward the rear.

In this configuration, the wind direction is controlled such that headwind (B) flowing along the outer side face 39b flows further outward than headwind (A) flowing along the inner side face 39a. The headwind as a whole will be therefore diffused further in the lateral direction.

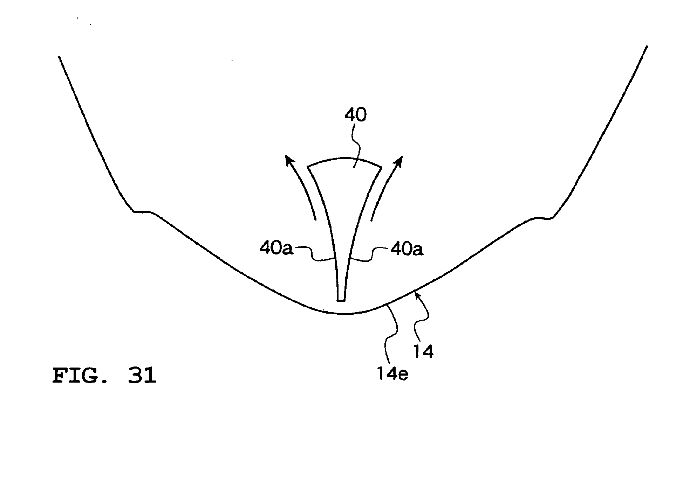

A projection 40 shown in Fig. 31 is disposed centrally in the lateral direction and both side faces 40a are formed to be bent so that they are separated from each other laterally toward the rear. A headwind is guided outward as shown in the figure by the arrows, whereby it will be diffused further in lateral directions.

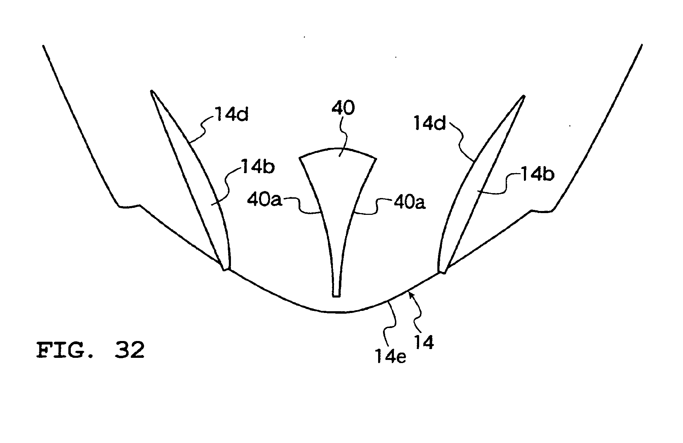

In a configuration shown in Fig. 32, centrally is formed the projection 40 shown in Fig. 31 and on both sides of this projection 40 are formed the projections 14b of the embodiment 1.

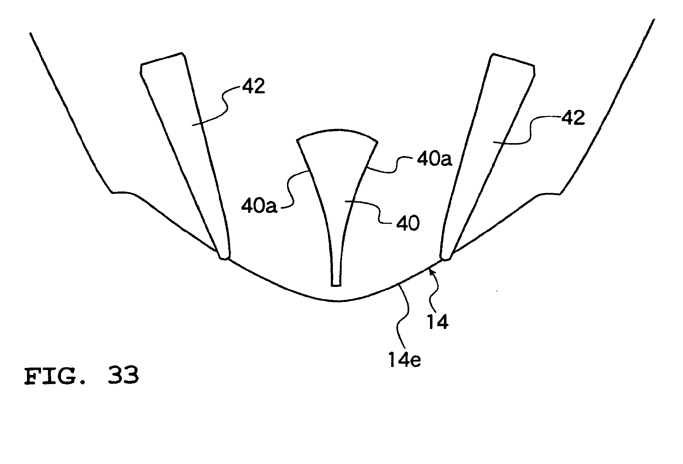

In a configuration shown in Fig. 33, centrally is formed the projection 40 shown in Fig. 33 and on both sides of the projection 40 are formed projections 42 each in an elongated, approximately triangular shape. The projection 42 may be formed narrower in its width.

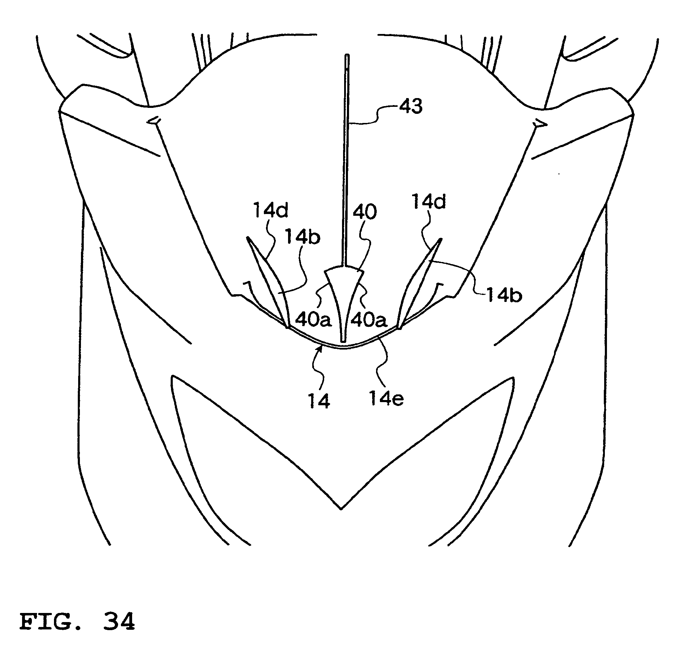

In a configuration shown in Fig. 34, a partition wall 43 is formed extending upward from the projection 40 formed centrally compared with the arrangement shown in Fig. 32. In such a configuration, flows of left and right headwinds can be separated from each other by the partition wall 43.

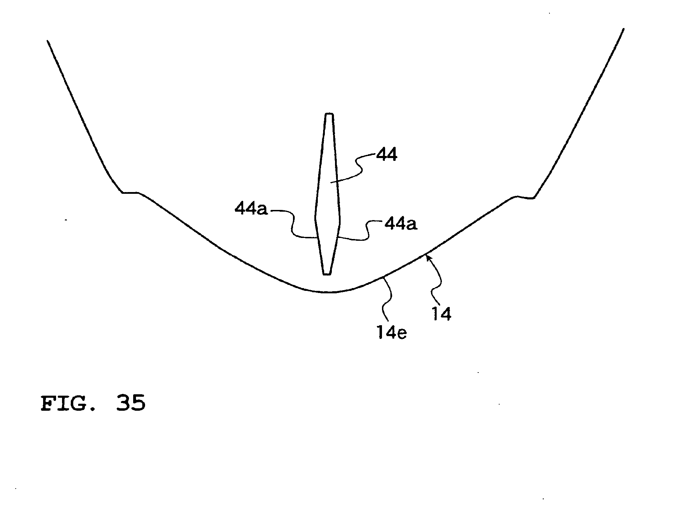

A projection 44 shown in Fig. 35 is disposed centrally in the lateral direction, assuming approximately a diamond shape, and is configured such that its side faces 44a on the lower side (forward end side) are spread apart upward (toward the rear).

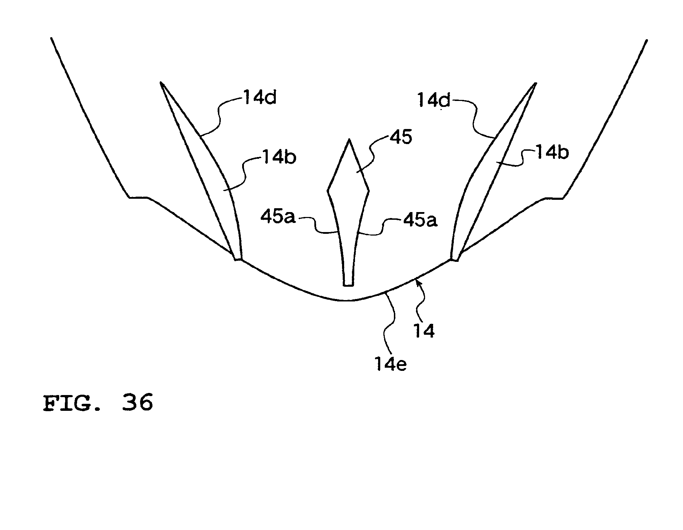

In a configuration shown in Fig. 36, centrally is formed a projection 45 approximately in a diamond shape, and on both sides of the projection45 is formed the projections 14b of the embodiment 1. The projection 45 is configured such that its side faces 45a on the lower side (forward end side) are spread apart upward (toward the rear).

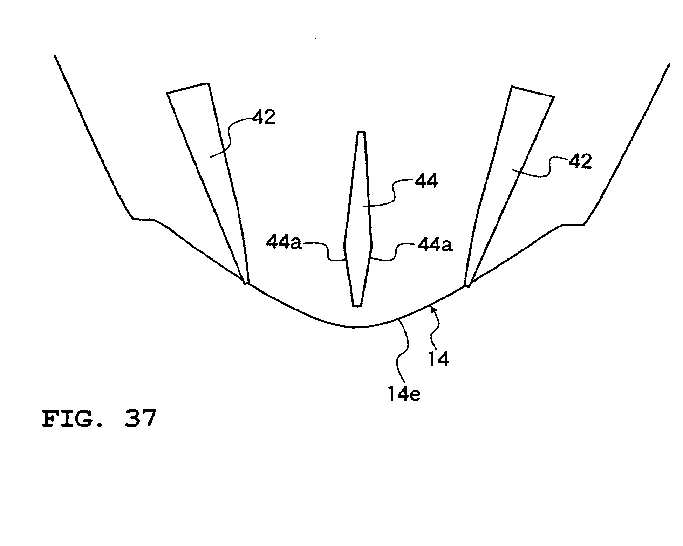

In a configuration shown in Fig. 37, in place of the projection 40 at the center shown in Fig. 33 is formed the projection 44 of Fig. 35.

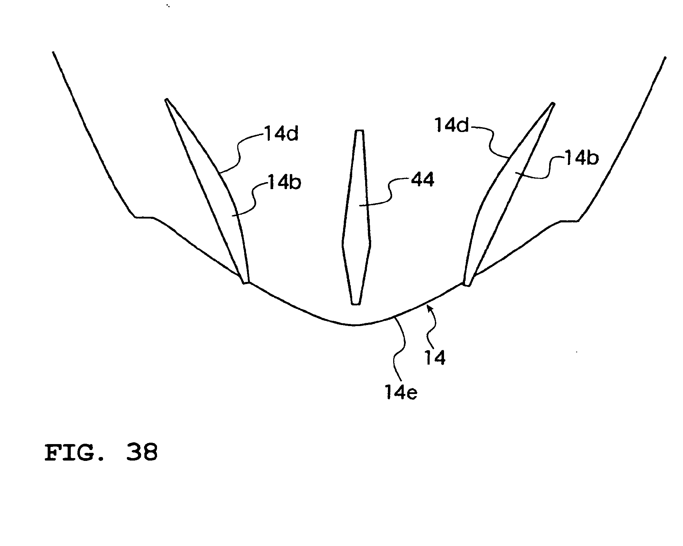

In a configuration shown in Fig. 38, in place of the projections 42 on both sides shown in Fig. 37 are formed the projections 14b of the embodiment 1.

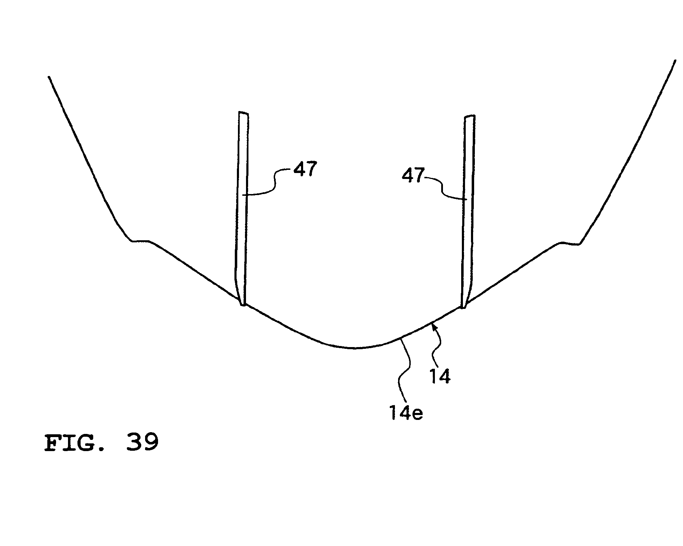

In a configuration shown in Fig. 39, a pair of left and right projections 47 are formed, each assuming the shape of a long plate disposed in the lateral direction, and they are formed parallel to each other.

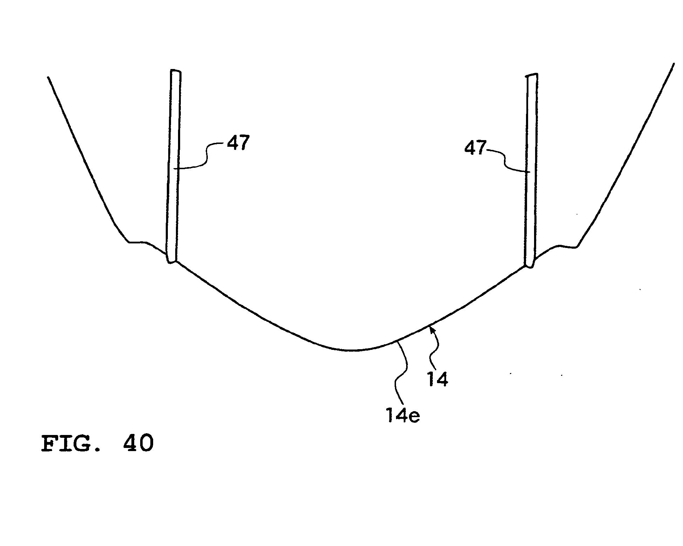

In a configuration shown in Fig. 40, the distance between the pair of projections 47 is larger than that shown in Fig. 39.

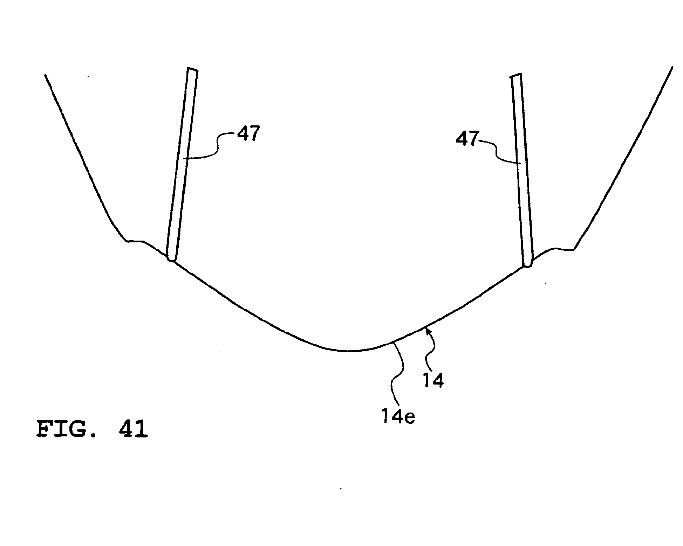

In a configuration shown in Fig. 41, a pair of plate-like projections 47 are formed to be inclined such that a distance therebetween narrows upward.

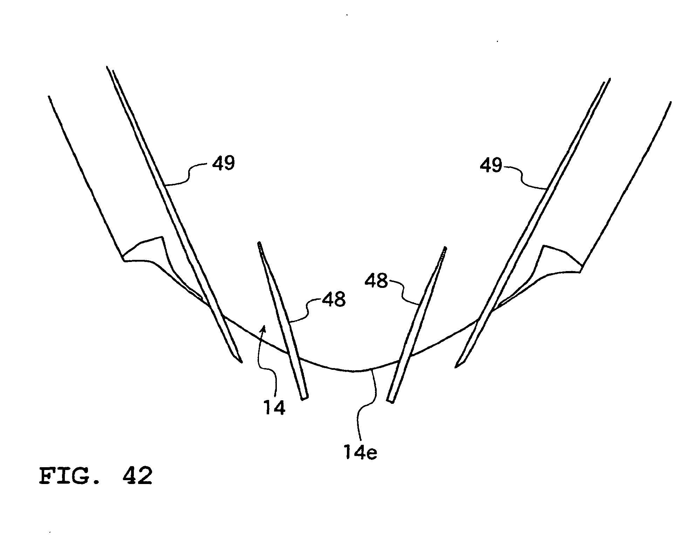

In a configuration shown in Fig. 42, two short projections 48 are formed in two locations, and two long projections 49 in two locations, each having a plate-like shape. The two short projections 48 are formed on the inner side, and the two long projections 48 on the outer side. These projections 48, 49 are configured so as to have a distance between each two increasing upward. Also, the lower ends of these projections 48, 49 are protruded downward from the lower edge 14e of the second inner panel 14. This downwardly-protruded-configuration allows smoother guidance of the wind.

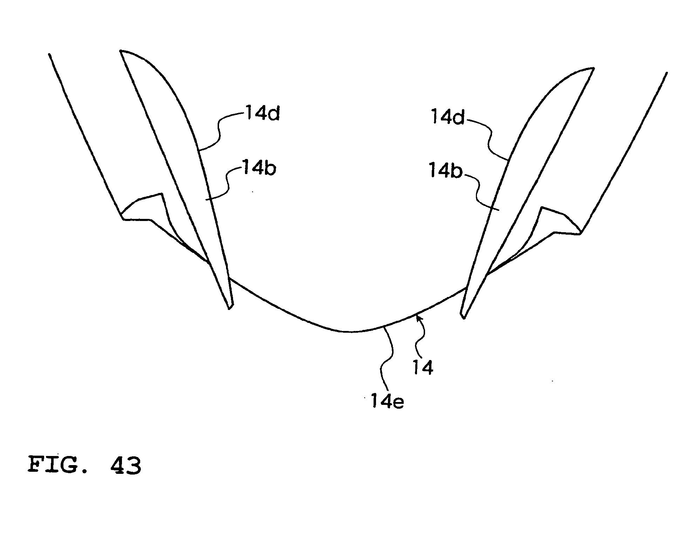

In a configuration shown in Fig. 43, projections are formed having the same shape as the projections 14b shown in the embodiment 1, and the lower ends of the projections 14b are protruded downward from the lower end 14e of the second inner panel 14.

Although in the foregoing embodiment, the projections 14b are formed integral with the second inner panel 14, this invention is not limited to that. Moving type projections 14b may be provided to regulate the direction of a headwind. In such a configuration, the velocity of the headwind can be set more properly according to the position of the helmet.

One projection, a pair of, or a plurality of projections are possible in this invention as described above, but they are preferably disposed symmetrical with respect to the center line O of the screen.

Further, although in the foregoing example, the projections 14b are formed integral with the second inner panel 14, they may be formed integral with the screen 15, or separately formed projections may be disposed.

Furthermore, although in the foregoing embodiment, the second inner panel 14 is used as a panel constituting one component of this invention, this invention is not limited to that. The body cowl 12 or the molding 13 may be used.

As described above, mounting portions of a screen as a windshield on both lower ends thereof are attached to a body and the lower part of the screen has the laterally central portion without touching said body to form an induction port between the screen and the body so that a headwind is introduced to the rear side of said screen through the induction port. Therefore, no induction port need be formed in the screen and no separate duct is needed, whereby a headwind can be introduced to the rear side of the screen, with a simple structure.

In order to provide a windshield device for a straddle type vehicle capable of introducing a headwind to the rear side of a screen, with a simple structure, it is proposed that mounting portions 15c of a screen 15 as a windshield on both lower ends 15a thereof are attached to a body and the lower part of the screen 15 has the laterally central portion without touching a second inner panel 14 to form an induction port 34 between the screen and the inner panel 14 so that a headwind is introduced to the rear side of the screen 15 through the induction port 34.

## Claims

1. Windshield device for a straddle type vehicle, comprising a screen (15) as a windshield attached to a body (12), said body (12) being connectable to part of a body frame of the vehicle, wherein the windshield device comprises an air induction port (34) formed between the screen (15) and the body (12), and wherein a panel (14) is disposed at a back side of the lower portion of said screen (15) and said induction port (34) is formed between said panel (14) and said screen (15), **characterized in that** at least a projection (14b,37-48) is formed projecting in said induction port (34) in a wind-sending path between said panel (14) and said screen (15).

2. Windshield device according to claim 1, **characterized in that** a lower portion of the screen (15) is attached to the body (12) at mounting portions (12d,15c), wherein a substantially laterally central portion of the screen (15) is separated from the body (12) by the air induction port (34).

3. Windshield device according to claim 1 or 2, **characterized in that** said projection (14b,37-48) is configured to diffuse introduced air in the vicinity of said induction port (34) in the lateral direction.

4. Windshield device according to one of the claims 1 to 3, **characterized in that** the projection (14b,37-48) extends in the longitudinal direction of the body (12).

5. Windshield device according to one of the claims 1 to 4, **characterized in that** said projection (14b,37-48) is provided, at least at the front, with a plurality of surfaces (14d,37a, 38a,39a,39b,40a,44a,45a) separated from each other laterally toward the rear.

6. Windshield device according to one of the claims 1 to 5, **characterized in that** said projection (14b,37-48) has a plurality of projecting portions formed side by side in the lateral direction and the projecting portions are formed to be separated from each other laterally toward the rear.

7. Windshield device according to one of the claims 1 to 6, **characterized in that** said projection (14d,37-48) is movably provided, **in that** a direction of diffusion of the introduced air is variable, or **in that** said projection (14d,37-48) is formed integrally with said panel (14) or said screen (15).

8. Windshield device according to one of the claims 1 to 7, **characterized in that** the lower portion of said screen (15) extends further forward at the laterally central portion (15e) than at both the lower sides of the screen (15).

9. Windshield device according to one of the claims 2 to 8, **characterized in that** mounting bolts, in particular screws and nuts (20) of said mounting portions (12d,15c) are hidden by extension pieces (13a) extending upwardly from a molding disposed below said screen (15).

10. Windshield device according to one of the claims 1 to 9, **characterized in that** an upwardly-rising draining portion (13f) is formed on the lower portion of said screen (15) and along the laterally central portion (15e) thereof, wherein the laterally central portion of the lower portion of said screen (15) and the draining portion (13f) thereon extend further forward toward the center than at both the lower sides.

11. Windshield device according to one of the claims 1 to 10, **characterized in that** the lower portion of said screen (15) extends further forward at the laterally central portion (15e) than at both the lower sides and the forward end of said projection is disposed further forward than both the lower sides.

12. Windshield device according to one of the claims 1 to 11, **characterized in that** a wind guide path formed between said panel (14) and said screen (15) is configured to have its smallest flow passage area at the side of said induction port (34).

13. Windshield device according to one of the claims 1 to 12, **characterized in that** said panel (14) is constituted by a body cowl (12), a molding or an inner panel (14).

14. Straddle type vehicle, **characterized by** comprising a windshield device according to one of the claims 1 to 13.

## Patentansprüche

1. Windschutzscheibenvorrichtung für ein Fahrzeug vorn Grätschsitz- Typ aufweisend eine Scheibe (15) als eine Windschutzscheibe, verbunden mit einer Karosserie (12), wobei die Karosserie (12) mit einem Teil eines Karosserierahmens des Fahrzeuges verbindbar ist, wobei die Windschutzscheibenvorrichtung eine Lufteinleitungsöffnung (34) aufweist, gebildet zwischen der Scheibe (15) und der Karosserie (12), und wobei ein Panel (14) auf einer Rückseite des unteren Abschnittes der Scheibe (15) angeordnet ist und die Einleitungsöffnung (34) zwischen dem Panel (14) und der Scheibe (15) gebildet ist, **dadurch gekennzeichnet, dass** zumindest ein Vorsprung (14b, 37 - 48) gebildet ist, der in die Einleitungsöffnung (34) in einen Windbeschickungspfad zwischen dem Panel 14) und der Scheibe (15) vorspringt.

2. Windschutzscheibenvorrichtung nach Anspruch 1, **dadurch gekennzeichnet, dass** ein unterer Abschnitt der Scheibe (15) mit der Karosserie (12) an Montageabschnitten (12d, 15c) verbunden ist, wobei ein im Wesentlichen seitlich mittlerer Abschnitt der Scheibe (15) von der Karosserie (12) durch die Lufteinleitungsöffnung (34) getrennt ist.

3. Windschutzscheibenvorrichtung nach Anspruch 1 oder 2, **dadurch gekennzeichnet, dass** der Vorsprung (14b, 37 - 48) konfiguriert ist, eingeleitete Luft in der Nähe der Einleitungsöffnung (34) in die seitliche Richtung zu zerstreuen.

4. Windschutzscheibenvorrichtung nach einem der Ansprüche 1 bis 3, **dadurch gekennzeichnet, dass** sich der Vorsprung (14b, 37 - 48) in der Längsrichtung der Karosserie (12) erstreckt.

5. Windschutzscheibenvorrichtung nach einem der Ansprüche 1 bis 4, **dadurch gekennzeichnet, dass** der Vorsprung (14b, 37 - 48) zumindest an der Vorderseite mit einer Mehrzahl von Oberflächen (14d, 37a, 38a, 39a, 39b, 40a, 44a, 45a), getrennt voneinander seitlich in Richtung nach hinten, versehen ist.

6. Windschutzscheibenvorrichtung nach einem der Ansprüche 1 bis 5, **dadurch gekennzeichnet, dass** der Vorsprung (14b, 37 - 48) eine Mehrzahl von vorspringenden Abschnitten hat, die nebeneinander in der seitlichen Richtung gebildet sind und die vorspringenden Abschnitte gebildet sind, voneinander seitlich in Richtung nach hinten getrennt zu sein.

7. Windschutzscheibenvorrichtung nach einem der Ansprüche 1 bis 6, **dadurch gekennzeichnet, dass** der Vorsprung (14b, 37 - 48) beweglich vorgesehen ist, dadurch eine Richtung der Zerstreuung der eingeleiteten Luft variabel ist, oder dadurch, dass der Vorsprung (14b, 37 - 48) mit dem Panel (14) oder der Scheibe (15) einstückig gebildet ist.

8. Windschutzscheibenvorrichtung nach einem der Ansprüche 1 bis 7, **dadurch gekennzeichnet, dass** sich der untere Abschnitt der Scheibe (15) weiter nach vorn an dem seitlichen mittleren Abschnitt (15e) als an beiden unteren Seiten der Scheibe (15) erstreckt.

9. Windschutzscheibenvorrichtung nach einem der Ansprüche 2 bis 8, **dadurch gekennzeichnet, dass** die Montageschrauben, insbesondere Schrauben und Muttern (20) der Montageabschnitte (12d, 15c), durch Erstreckungsteile (13a) versteckt sind, die sich nach oben von einem Formkörper erstrecken, angeordnet unter der Scheibe (15).

10. Windschutzscheibenvorrichtung nach einem der Ansprüche 1 bis 9, **dadurch gekennzeichnet, dass** ein aufwärts aufsteigender Ablaufabschnitt (13f) an dem unteren Abschnitt der Scheibe (15) und entlang des seitlichen mittleren Abschnittes (15e) desselben gebildet ist, wobei der seitlich mittlere Abschnitt des unteren Abschnitts der Scheibe (15) und der Ablaufabschnitt (13f) an diesem sich weiter nach vorn in Richtung zu der Mitte als an beiden der unteren Seiten erstrecken.

11. Windschutzscheibenvorrichtung nach einem der Ansprüche 1 bis 10, **dadurch gekennzeichnet, dass** sich der untere Abschnitt der Scheibe (15) weiter nach vorn an dem seitlichen mittleren Abschnitt (15e) als an beiden unteren Seiten erstreckt und das vordere Ende des Vorsprungs weiter nach vorn als an den unteren Seiten angeordnet ist.

12. Windschutzscheibenvorrichtung nach einem der Ansprüche 1 bis 11, **dadurch gekennzeichnet, dass** ein Windführungspfad, gebildet zwischen dem Panel (14) und der unteren Scheibe (15), konfiguriert ist, seinen kleinsten Strömungskanalbereich auf der Seite der Einleitungsöffnung (34) zu haben.

13. Windschutzscheibenvorrichtung nach einem der Ansprüche 1 bis 12, **dadurch gekennzeichnet, dass** das Panel (14) durch eine Karosserieverkleidung (12), einen Formkörper oder ein Innenpanel (14) gebildet ist.

14. Fahrzeug vorn Grätschsitz- Typ, **gekennzeichnet durch** eine Windschutzscheibenvorrichtung nach einem der Ansprüche 1 bis 13.

## Revendications

1. Dispositif de pare-brise pour un véhicule de type à monter à califourchon, comprenant un écran (15) en tant que pare-brise fixé à un corps (12), ledit corps (12) pouvant être raccordé à une partie de carrosserie du véhicule, dans lequel le dispositif de pare-brise comprend un orifice d'admission d'air (34) formé entre l'écran (15) et le corps (12), et dans lequel un panneau (14) est disposé au niveau d'un côté arrière de la partie inférieure dudit écran (15) et ledit orifice d'admission (34) est formé entre ledit panneau (14) et ledit écran (15), **caractérisé en ce qu'**au moins une saillie (14b, 37 à 48) est formée, faisant saillie dans ledit orifice d'admission (34) dans un trajet de transmission de vent entre ledit panneau (14) et ledit écran (15).

2. Dispositif de pare-brise selon la revendication 1, **caractérisé en ce qu'**une partie inférieure de l'écran (15) est fixée au corps (12) au niveau de parties de montage (12d, 15c), dans lequel une partie sensiblement latéralement centrale de l'écran (15) est séparée du corps (12) par l'orifice d'admission d'air (34).

3. Dispositif de pare-brise selon la revendication 1 ou 2, **caractérisé en ce que** ladite saillie (14b, 37 à 48) est configurée pour diffuser l'air introduit au voisinage dudit orifice d'admission (34) dans la direction latérale.

4. Dispositif de pare-brise selon l'une des revendications 1 à 3, **caractérisé en ce que** la saillie (14b, 37 à 48) s'étend dans la direction longitudinale du corps (12).

5. Dispositif de pare-brise selon l'une des revendications 1 à 4, **caractérisé en ce que** ladite saillie (14b, 37 à 48) est pourvue, au moins à l'avant, d'une pluralité de surfaces (14d, 37a, 38a, 39a, 39b, 40a, 44a, 45a) séparées les unes des autres latéralement vers l'arrière.

6. Dispositif de pare-brise selon l'une des revendications 1 à 5, **caractérisé en ce que** ladite saillie (14b, 37 à 48) présente une pluralité de parties en saillie formées côte à côte dans la direction latérale et les parties en saillie sont formées pour être séparées les unes des autres latéralement vers l'arrière.

7. Dispositif de pare-brise selon l'une des revendications 1 à 6, **caractérisé en ce que** ladite saillie (14d, 37 à 48) est disposée de façon mobile, **en ce qu'**une direction de diffusion de l'air introduit est variable, ou **en ce que** ladite saillie (14d, 37 à 48) est formée de manière solidaire avec ledit panneau (14) ou ledit écran (15).

8. Dispositif de pare-brise selon l'une des revendications 1 à 7, **caractérisé en ce que** la partie inférieure dudit écran (15) s'étend davantage vers l'avant au niveau de la partie latéralement centrale (15e) qu'au niveau des deux côtés inférieurs de l'écran (15).

9. Dispositif de pare-brise selon l'une des revendications 2 à 8, **caractérisé en ce que** des boulons de montage, en particulier des vis et écrous (20) desdites parties de montage (12d, 15c) sont cachés par des pièces d'extension (13a) en extension vers le haut à partir d'un moulage disposé sous ledit écran (15).

10. Dispositif de pare-brise selon l'une des revendications 1 à 9, **caractérisé en ce qu'**une partie de drainage s'élevant vers le haut (13f) est formée sur la partie inférieure dudit écran (15) et le long de la partie latéralement centrale (15e) de celui-ci, dans lequel la partie latéralement centrale de la partie inférieure dudit écran (15) et la partie de drainage (13f) sur celui-ci s'étendent davantage vers l'lavant vers le centre qu'au niveau des deux côtés inférieurs.

11. Dispositif de pare-brise selon l'une des revendications 1 à 10, **caractérisé en ce que** la partie inférieure dudit écran (15) s'étend davantage vers l'avant au niveau de la partie latéralement centrale (15e) qu'au niveau des côtés inférieurs et l'extrémité avant de ladite saillie est disposée davantage vers l'avant que les deux côtés inférieurs.

12. Dispositif de pare-brise selon l'une des revendications 1 à 11, **caractérisé en ce qu'**un trajet de guidage du vent formé entre ledit panneau (14) et ledit écran (15) est configuré pour avoir sa plus petite aire de passage d'écoulement au niveau du côté dudit orifice d'admission (34).

13. Dispositif de pare-brise selon l'une des revendications 1 à 12, **caractérisé en ce que** ledit panneau (14) est constitué d'un capot de carrosserie (12), d'un moulage ou d'un panneau interne (14).

14. Véhicule de type à monter à califourchon, **caractérisé en ce qu'**il comprend un dispositif de pare-brise selon l'une des revendications 1 à 13.
